(19)

Europäisches
Patentamt
European
Patent Office
Office européen
des brevets

(11) **EP 1 900 169 B1**

(12) **EUROPEAN PATENT SPECIFICATION**

(45) Date of publication and mention
of the grant of the patent:
**03.02.2010 Bulletin 2010/05**

(51) Int Cl.:
***H04L 29/06*** *(2006.01)*

(21) Application number: **05757079.8**

(22) Date of filing: **07.07.2005**

(86) International application number:
**PCT/SE2005/001128**

(87) International publication number:
**WO 2007/008120 (18.01.2007 Gazette 2007/03)**

(54) **METHOD AND ARRANGEMENT FOR AUTHENTICATION AND PRIVACY**

VERFAHREN UND ANORDNUNG FÜR AUTHENTIFIKATION UND PRIVATSPHÄRE

PROCEDE ET ENSEMBLE POUR AUTHENTIFICATION ET CONFIDENTIALITE

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**19.03.2008 Bulletin 2008/12**

(73) Proprietor: **Telefonaktiebolaget LM Ericsson
(publ)
164 83 Stockholm (SE)**

(72) Inventors:
• **BARRIGA, Luis
S-128 33 Skarpnäck (SE)**
• **CASTELLANOS-ZAMORA, David
E-28039 Madrid (ES)**

(74) Representative: **Norin, Klas
Ericsson AB
Patent Unit Service Layer & Multimedia
Torhamnsgatan 21-23
164 80 Stockholm (SE)**

(56) References cited:
**US-A1- 2005 102 501**

• **"ETSI TS 133 220 Universal Mobile
Telecommunications System (UMTS); Generic
Authentication Architecture (GAA); Generic
bootstrapping architecture (3GPP TS 33.220
version 6.5.0 Release 6" ETSI STANDARDS,
EUROPEAN TELECOMMUNICATIONS
STANDARDS INSTITUTE, SOPHIA-ANTIPO, FR,
no. V650, June 2005 (2005-06), pages 1-40,
XP014030762 ISSN: 0000-0001**

**Description**

**Field of invention**

The present invention concerns a method and arrangement for authentication of user entities in a communications network. In particular, the invention concerns improved security in a communications network implementing a Generic Authentication /Generic Bootstrapping Architecture, GAA/GBA.

**Background**

The 3GPP authentication infrastructure, including the 3GPP Authentication Centre (AuC), the Universal SIM Card (USIM) or the IM Services Identity Module (ISIM), and the 3GPP Authentication and Key Agreement protocol (AKA) run between them, is a very valuable asset of 3GPP operators. It has been recognized that this infrastructure could be leveraged to enable application functions in the network and on the user side to establish shared keys. Therefore, 3GPP has specified "Generic Bootstrapping Architecture" (GBA) enabling distribution of shared secrets to the User Equipment (UE) and a Network Application Function (NAF) using AKA-based mechanisms ([1], [2]).

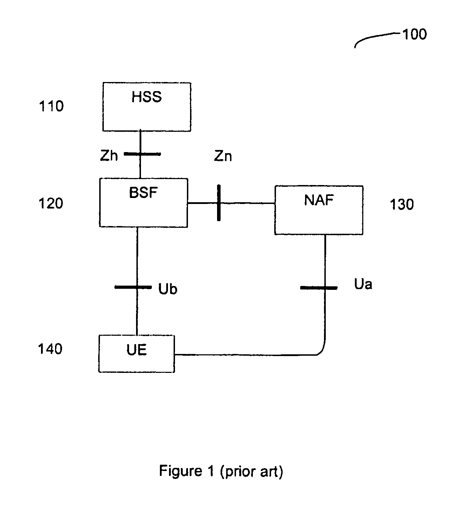

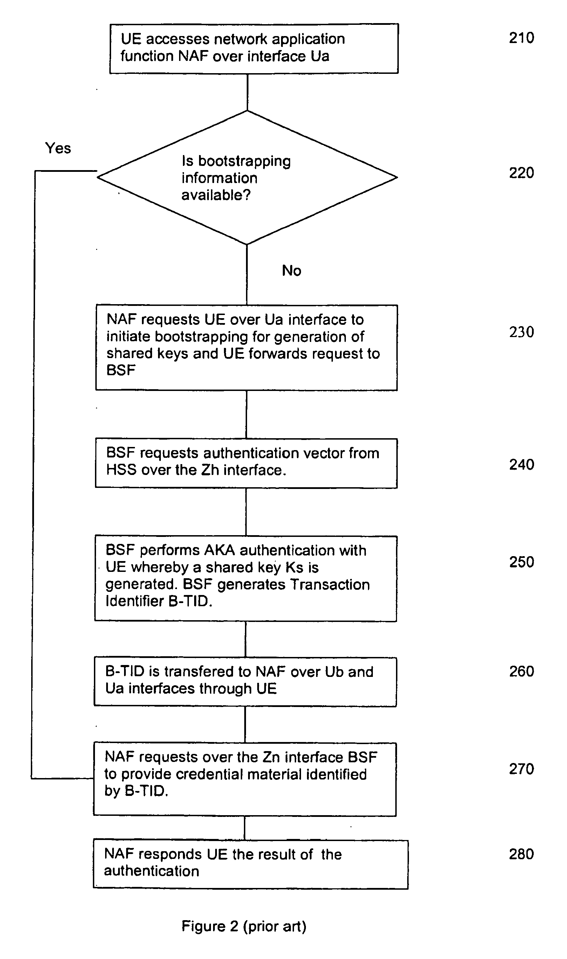

Figure 1 shows a simple reference model according to reference [2] for bootstrapping keys in the NAF and UE with support from a new network infrastructure component, a Bootstrapping Server Function (BSF) and the Home Subscriber System (HSS). With reference to Figure 1, a flow diagram in Figure 2 explains the steps in prior art bootstrapping. At step 210 the user equipment UE makes access to the network application function NAF over interface Ua. In step 220 it is determined if the access included identifier to authentication data that is already available. If this is the case the flow continues in step 270. Otherwise, in step 230, NAF requests UE to initiate bootstrapping using the GBA method for generation of shared keys. UE redirects the request to BSF over the Ub interface. The request for bootstrapping can be result of redirection ordered from NAF, as described here, or otherwise be performed prior to UE making the access to NAF in step 210. Configuration of UE determines which case applies. In step 240 BSF requests an authentication vector from HSS over the Zh interface. At step 250, BSF performs an AKA authentication with UE over the Ub interface using the authentication vector. A shared key Ks is generated and BSF, in addition, creates a Transaction Identifier B-TID that identifies the credential material generated at BSF. In step 260, the identifier B-TID is transferred to NAF through UE over interfaces Ub and Ua. At step 270, NAF contacts BSF over the Zn interface providing the identifier B-TID whereby BSF responds with the corresponding credential material. At step 280 NAF responds to the original request in step 210 including the result of the authentication.
At this point, NAF is able to use the distributed credentials. This material may be used for further end-user authentication that NAF may initiate e.g. the http-digest procedure as defined in [3] using the distributed shared secrets. The credentials can also be used for other purposes than authentication, e.g. for integrity, confidentiality, or key derivation.

3GPP is proposing the use of GBA for end-user authentication purposes defining a so-called "Generic Authentication Architecture", GAA as described in reference [1]. GAA leverages GBA procedures to establish shared secrets at the UE and NAF so that these credentials can be further used as the base for subsequent end-user authentication mechanisms executed between the NAF and UE.

3GPP has also studied use of GBA in an IMS system, e.g. reference [4].

There are two fundamental problems with GAA/GBA:

- It has weak support for user privacy and collusion is possible since two or more independent third party applications can trace back the user over the Ua interface.

- Current GAA/GBA architecture does not provide explicit support for end-user authentication. If an application makes use of GAA/GBA architecture exclusively for authentication, the NAF application needs to implement additional end-user authentication mechanisms based on the bootstrapped key. Furthermore, the user will be effectively authenticated twice: once by the BSF and thereafter by the NAF.

Regarding privacy, it is noticed that the same B-TID is used for every NAF. This fact can be used to build a user profile indicating subscribed services thus violating privacy requirements. This type of privacy attack is known as collusion. While being a minor issue for applications that are provided by the same operator, it becomes a serious concern when third parties provide applications or when the operator hosts 3rd party services within its premises.

Further, the GAA/GBA architecture has a problem in that man-in-the-middle attacks are possible whereby a fraudulent user can request credentials belonging to someone else.

Basically, the GAA/GBA architecture is SIM-based key-distribution architecture. The term "SIM" is here understood as either USIM (3G) or ISIM. GAA/GBA is not generic with respect to the supported authentication mechanisms since it assumes SIM-based authentication. Further, GAA/GBA is not authentication oriented since the provisioned keys may or may not be used for authentication.

It is a disadvantage of GAA/GBA requiring applications to implement the following mechanisms in order to become GAA/GBA compliant:

- Key management for secure storage of provisioned key, track of key validity, binding key to a specific user and application, refresh of keys when validity has expired.

- Protocol to fetch the keys from the BSF, e.g. Diameter.

- Authentication protocol to authenticate the user.

- Secure channels to protect key distributions.

The burden of implementing all these GAA/GBA mechanisms, especially the need to implement a key distribution procedure, is high for applications that often only require validating the user identity.

Many applications may not even implement mechanisms to authenticate the user due to the burden of managing user credentials such as passwords. In fact, the problem of password management (storage, protection, renewal, loss, invalidation, theft) has been identified as a barrier for application deployment.

Further disadvantages of prior art GAA/GBA architecture relate to the operator:

- Delegation of service authorization to the application whereas centralized authorization may be preferred.

- No support for statistics collection due to lack of control over application usage.

- No automatic mechanism to invalidate service subscription.

Therefore, there is need for an improved GAA/GBA architecture that overcomes problems and disadvantages of prior art system and providing for additional privacy protection and authentication support.

## Summary of the invention

The present invention improves over the deficiencies and drawbacks of the prior art arrangements.

Generally, the purpose of this invention is to leverage on the existing GAA/GBA infrastructure in order to improve privacy protection and authentication support keeping changes to the current GAA/GBA procedure to a minimum.

An object of the invention is to provide an Authentication Voucher asserting authorization of a user in a communications network that implements a GAA/GBA -architecture.

A further object is to provide a key identifier B_TID_NAF, linked to a user entity UE that is unique for each network application node NAF.

Another object is to prevent man-in-the-middle attacks on the Ua interface and to enable BSF to verify the sender of a bootstrapping identifier B_TID_NAF.

Still another object is to arrange for NAF to communicate with BSF for verifying that NAF requirements on the authentication of a user are fulfilled without revealing, in said communication, such data that allows tracking of the user entity UE.

It is a further object of the invention to allow for batch generation of keys Ks_NAF and corresponding identifiers B_TID_NAF related to a plurality of Network Application Functions, NAF.

It is an object of the invention to arrange the Authentication Voucher to be unique for each NAF thereby avoiding collusion between several NAF entities for tracking the user.

It is a specific object to provide a method and system for improved privacy protection and authentication support in a communications network implementing a GAA/GBA-architecture.

It is also a specific object to provide a BSF network node for supporting improved privacy protection and authentication.

These and other objects are achieved by a method and arrangement according to the accompanying patent claims.

Briefly the invention involves a Bootstrap Server Function (BSF) that creates, at request of a user, an Authentication Voucher asserting that the user has been authenticated by use of any method for authentication. Following standard procedure, reference [2], BSF generates keys Ks and Ks_NAF, the latter for use in communication between a user and a network application function NAF. The key Ks_NAF is identified over the Ua interface, according to the invention, by an identifier B_TID_NAF that is unique for each NAF in contrast to standard procedure wherein a same identifier, B_TID, is used for any NAF. A user accessing a network application function NAF provides the identifier B_TID_NAF enabling NAF to derive from the identifier the address of its home BSF and to request the Authentication Voucher at BSF. In response to the identifier B_TID_NAF, the BSF may identify the Authentication Voucher to enable establishment of authentication status of UE. The use of a unique identifier B_TID_NAF prevents creation of a user profile and improves privacy.

Further optional improvements of privacy, according to the invention, are achieved for example by signing the identifier B_TID_NAF (or alternatively B_TID) using the key Ks known to BSF and the user UE. This prevents man-in-the-middle attacks on the interface between user UE and network application function NAF. Encrypting communication of credentials between user UE and BSF over the Ub interface by use of the key Ks is another example of how to further improve security of the system.

In an exemplary embodiment, the Authentication Voucher may be stripped of any information that allows tracking of the user and only provide an assertion that authentication of the user has taken place. If NAF has further requirements on the authentication procedure, NAF can present to BSF these requirements and BSF respond thereto with a confirmation of those requirements that are fulfilled.

In another exemplary aspect of the invention BSF sends the Authentication Voucher to the user UE over the Ub interface. The user presents the Authentication Voucher to a NAF being accessed. According to the invention, NAF relies on BSF to verify validity of the Authentication Voucher before accepting further communication with the user. The identity B_TID_NAF may also be used to retrieve the key Ks_NAF from BSF if NAF, additionally, e.g. requires establishment of session keys with UE.

The invention is generally applicable on existing GAA/GBA infrastructure in order to improve privacy protection and authentication. As GBA is currently discussed for use in IMS systems it is foreseen to apply the invention in such systems.

A major advantage of the invention is to provide a method for authentication of a user without the need to implement, at a network application function NAF, support for key management.

Another advantage of the invention is to provide enhanced privacy protection to current GAA/GBA infrastructure including protection against colluding NAF-entities and man-in-the-middle attacks.

Other advantages offered by the present invention will be appreciated upon reading of the following detailed description of several embodiments of the invention in conjunction with attached drawings and which are taken as examples only being it clear for a skilled person that numerous other embodiments are possible without departing from the main purpose of the invention.

**Brief description of the drawings**

The invention, together with further objects and advantages thereof, will be best understood by reference to the following description taken together with the accompanying drawings, in which:

Figure 1    shows a simple network model of the entities involved in the bootstrapping approach according to prior art;

Figure 2    shows a flowchart of the bootstrapping procedure according to prior art;

Figure 3    illustrates a block diagram of relevant parts of an exemplary bootstrapping server according to an embodiment of the invention;

Figure 4    shows a flow chart of the bootstrapping procedure according to an embodiment of the invention;

Figure 5    is a flow chart that shows a user entity accessing a network application function;

Figure 6    is another embodiment that shows a user entity accessing a network application function;

Figure 7    shows still another embodiment wherein a user entity accesses a network application function;

Figure 8    illustrates an embodiment wherein an Authentication Voucher is made unique for each network application function.

**Detailed description of exemplary preferred embodiments**

In a first exemplary aspect of the invention, an additional bootstrapping identifier to B-TID currently defined in GAA/GBA specifications is introduced. B_TID and key Ks will be generated according to the GAA standard. However, according to the invention, B_TID is only used between the UE and the BSF, i.e. over the Ub interface whereas the additional bootstrapping identifier, B_TID_NAF, is normally used between the UE and the NAF over the Ua interface. B_TID_NAF is different from B_TID and specific for each NAF.

According to the GAA/GBA standard the UE does not need to contact BSF each time a new NAF is accessed since B_TID is sufficient to locate a NAF and to identify user credentials. However, as explained above, such an approach compromises privacy across NAF entities. Therefore, according to an exemplary preferred embodiment of the invention, an extra signaling with the BSF for each new NAF is introduced. However, the volume of signaling may be decreased by a batch procedure that is further described below.

BSF will maintain links between identity of UE, B_TID, Ks and a set of B_TID_NAF identifiers and associated keys Ks_NAF generated for a corresponding set of NAF entities.

The use of a unique B_TID_NAF for each NAF prevents the user from being tracked over the Ua interface.

Whenever a user wants to access an application NAF that is only requiring identifying/authenticating the user, the NAF will be directed to the BSF, which then acts as an authentication center/authority.

According to an exemplary preferred embodiment of the invention the BSF generates an Authentication Voucher attesting that the user has been authenticated. The Authentication Voucher will be identified by B_TID over the Ub interface. Over Ua interface the Authentication Voucher will be identified by the B_TID_NAF. NAF can refer to the voucher by providing the B_TID_NAF identifier over the Zn interface.

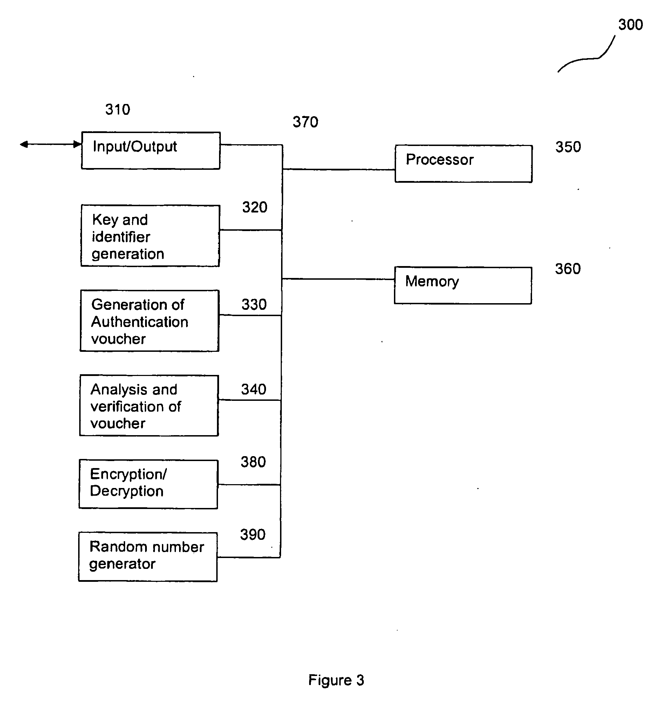

Figure 3 shows, at 300, an exemplary block diagram of a bootstrap server function, BSF, according to the invention. Figure 3 only shows the parts of BSF that are relevant for the invention.

At 310 there are means for input/output for exchanging data with other units. An internal bus system 370 interconnects the different function means. At 320 means are shown for generation of keys and corresponding key identifiers, e.g. key Ks and identifier B_TID. At 330 is shown means for generation of an Authentication Voucher and at 340 there are means for verification of validity of an Authentication Voucher. Means for encryption/decryption is shown at 380. Random numbers are generated by means 390. Storage means 360 stores generated information such as user identity, key Ks, keys B_TID_NAF, key identifiers and links data related to a specific user. Processing means 350 controls internal operations of the unit 300. It is understood that the function means of the node 300 can be implemented as hardware, software or a mix of the two.

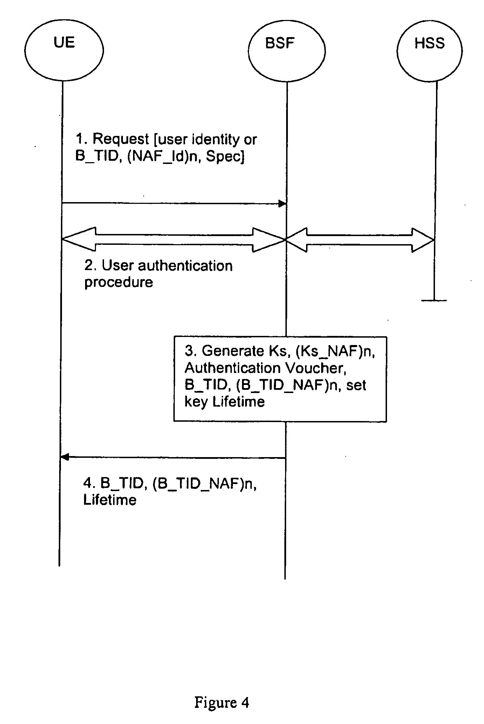

An exemplary method for initial authentication of a user and creation of Bootstrapping material, according to the invention, is clearer from Figure 4, which shows a signal flow diagram for an exemplary communication between UE, BSF, HSS, and NAF.

In step 1, UE initiates the Bootstrapping procedure by sending a request to BSF. The request can be sent by UE as result of configuration setting prior to accessing any NAF.

Alternatively, according to the standard reference [2], the request can result from redirection order by NAF in response to an initial access attempt wherein NAF determines that no previous Bootstrapping data exist or has expired.

The request may include an explicit user identity, e.g. International Mobile Station Identity (IMSI) or IP Multimedia Private Identity (IMPI) reference [5]. At least one identifier B_TID_NAF is generated that identifies generated data for a particular NAF, e.g. a key related to NAF.

If the request concerns an operation involving a previously generated key Ks, e.g. for generation of a key derived from Ks, Ks_NAF, related to a specific NAF or for retrieving a previously generated key Ks_NAF the request includes the identifier B_TID in place of an explicit user identity and at least the identity of one particular NAF. It is noticed that B_TID is sufficient for BSF to retrieve the identity of UE. This procedure is introduced in order to improve the privacy of the user identity in the additional signaling introduced according to the invention.

The request may also include a specification, "spec", providing additional requirements on the request. For example, such specification may relate to particular requirements that NAF may have, e.g. if a key Ks_NAF is required, an Authentication Voucher or both or else if a specific authentication method should be used, exemplary authentication based on a USIM-card.

In step 2, BSF initiates a user authentication procedure if no valid bootstrapping key Ks exists for the user as indicated by the user ID or B_TID. Exemplary, an AKA authentication procedure may be executed well known in the art, or authentication procedure may use a public key algorithm.

In step 3, BSF generates a bootstrapped key Ks and, in addition, an Authentication Voucher. The Authentication Voucher, may for example include information on:

- Authentication time,
- Authentication method, and/or
- Authentication lifetime.

Typically, the lifetime of the Authentication Voucher and the bootstrapped Ks will be the same but it could be set individually.

Information about the authentication method indicates, for example, whether user has a USIM or an ISIM card or whether user authentication was of type GBA-me, based on the mobile equipment, or GBA-u, based on a Universal Integrated Circuit Card, UICC.

Further, in this step, B_TID is generated and derived keys Ks_NAF with corresponding B_TID_NAF identifiers. The lifetime is also set for various entities such as keys Ks, Ks_NAF, and Authentication Voucher.

In step 4, identifiers B_TID, (B_TID_NAF)n and the lifetime of the bootstrapping material are returned to the UE.

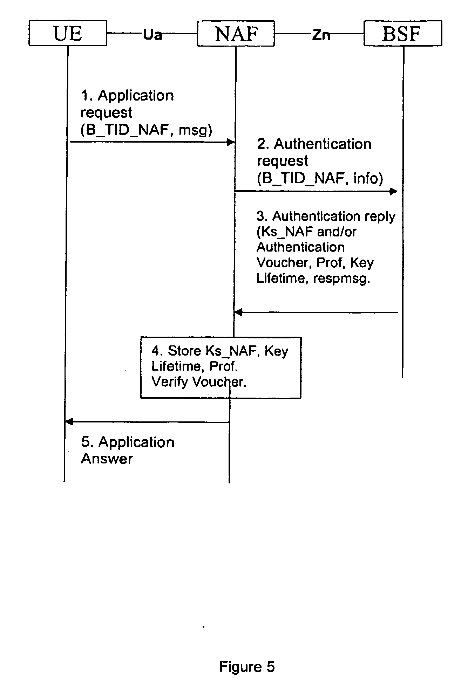

Figure 5 illustrates an exemplary process wherein UE accesses a NAF requesting services. In step 1 UE accesses a NAF submitting the identifier B_TID_NAF that allows NAF to retrieve from BSF the UE credentials.

If desired or otherwise appropriate, the B_TID_NAF can be protected during transfer between entities e.g. with TLS/SSL. Additional application specific data (msg), may also be included.

NAF submits a request for authentication of the user in step 2 forwarding the received identifier B-TID-NAF. In order to eliminate a need for NAF applications, which are only interested in user authentication, to support and implement additional key management and user authentication mechanisms, a NAF application can request BSF only to provide a user Authentication Voucher. Thus NAF may, in step 2, include information (info) e.g. to indicate a need for an Authentication Voucher, a key Ks_NAF, or both of these entities.

In step 3 BSF returns to NAF the requested material. The response by BSF to NAF may be protected with some transport security e.g. TLS/SSL. In addition, at least part of a user profile (Prof), key lifetime (Key Lifetime), the Authentication Voucher, and a response message (respmsg) may be included. The Authentication Voucher enables NAF to verify authentication of the user. As mentioned in relation to Figure 4, BSF may also include an instruction to UE to redirect the request to BSF for generation of new credentials if these are missing or have expired.

Alternatively, only the Authentication Voucher is returned to NAF, e.g. NAF applications that are only interested in user authentication.

In step 4, NAF usually stores at least some of the received material. In particular, NAF may not need to store the Authentication Voucher after verification. This means that if only the Authentication Voucher has been returned, it may not be necessary to store any information. If a key Ks_NAF has been received this can be used in subsequent accesses by UE as long as key lifetime is valid. NAF preferably checks the information within the Authentication Voucher in order to verify end-user authentication status. However, as will become apparent from the description of alternative embodiments below, the verification of the Authentication Voucher can alternatively be performed at the BSF.

In step 5, NAF may respond to the initial request in step 1 indicating if UE needs to request new credentials at BSF according to Figure 4. In this case the identifier B_TID is used in step 1 of Figure 4.

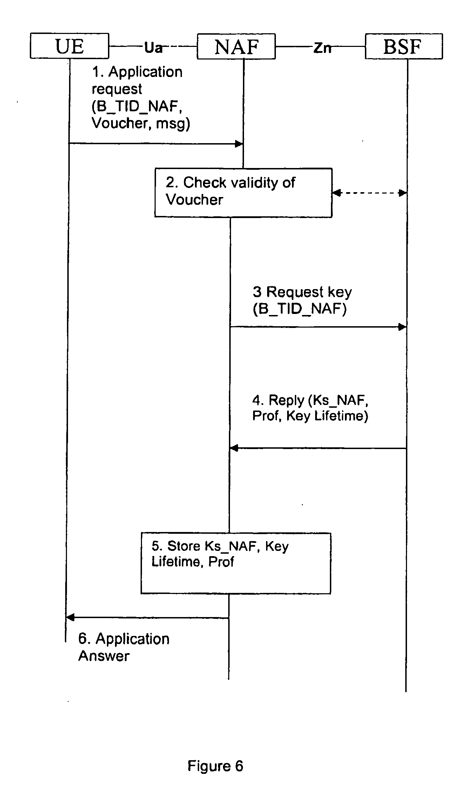

In a second exemplary aspect of the invention, the Authentication Voucher is sent to the user equipment UE over the Ub interface. UE presents the voucher to NAF when requesting services from NAF. With reference to Figure 4, according to this second aspect of the invention, step 4 preferably includes the Authentication Voucher, or alternatively it is sent separately. Figure 6 illustrates an example of UE accessing a NAF using the Authentication Voucher. In step 1 UE sends a request to NAF including a Voucher. In step 2 NAF derives from B_TID_NAF the address to BSF and for example verifies validity of the Voucher in communication with BSF. This is indicated by the dotted line in Figure 6.

If the Voucher is valid NAF may request, in step 3, a key from BSF as identified by B_TID_NAF. In step 4, BSF normally replies with a key (Ks_NAF), key lifetime (Key Lifetime), and preferably also at least part of profile information (Prof). The key request and response in steps 3 and 4 may also be included within step 2 as part of the communication between NAF and BSF in the voucher verification process. In step 5, the received material is stored and in step 6 a response is given to the user entity UE. Again, it is noticed that a request for a key Ks_NAF is optional and that, for authentication only, the Voucher is sufficient.

**Exemplary alternative embodiments**

In an exemplary embodiment of the invention, B_TID and B_TID_NAF in Figure 4 step 4 are encrypted by Ks. As UE has the same key it can decrypt these entities.

According to another exemplary embodiment, a plurality of NAF_ID may be included in the request Figure 5 step 1 for simultaneous generation of a corresponding plurality of keys Ks_NAF and identifiers B_TID_NAF thereby decreasing signaling volume by avoiding a specific request for each individual NAF.

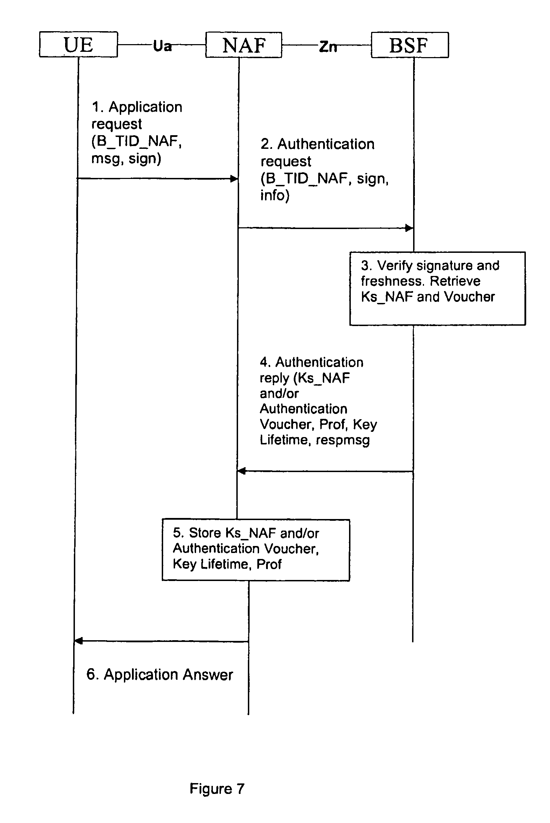

Figure 7 illustrates another exemplary embodiment wherein, in order to prevent man-in-the-middle attacks on the interface Ua, the identifier B-TID-NAF is characterized to be of a single use only. Exemplary, B_TID_NAF is signed using the key Ks known only to UE and BSF. The signature may include a freshness token. The signature is, according to this embodiment, included in steps 1 and 2 as illustrated in Figure 5 exemplary included in message parameter (msg).

In step 3 of Figure 7 the signature and freshness are verified at the BSF using the key Ks.

Steps 4 - 6 are similar to steps 3 - 5 in Figure 5.

According to an alternative embodiment of the first aspect of the invention, the Authentication Voucher is limited to a message that authentication has been made. It is noticed that certain information, as specified in the first aspect of the invention, such as method for authentication and time for authentication, may be used to track the user and, thus, to attack privacy. According to the alternative embodiment, the information contained in the Voucher is limited to information that does not allow any such tracking. If NAF requires further information, in order to accept the assertion of authentication, it can send to BSF these requirements whereupon BSF verifies thus requirements that are fulfilled. Exemplary, NAF may require that the user be authenticated based on a USIM-card. This question/response dialogue can be included in steps 2 and 3 Figure 5 wherein the parameters (info) and (respmsg) respectively may contain NAF requirements and BSF response thereto.

Regarding the second aspect of the invention, step 2 in Figure 6 may be implemented as the following alternative embodiments describe.

In one embodiment the key Ks encrypts the Authentication Voucher and verification of validity is made by NAF sending the encrypted Authentication Voucher to BSF. BSF has the key Ks and can decrypt the Authentication Voucher and verify its validity. Thus, with reference to Figure 6, the Authentication Voucher in step 1 is encrypted. The communication indicated with a dotted line in step 2 of Figure 6 now includes sending the encrypted Authentication Voucher to BSF for verification.

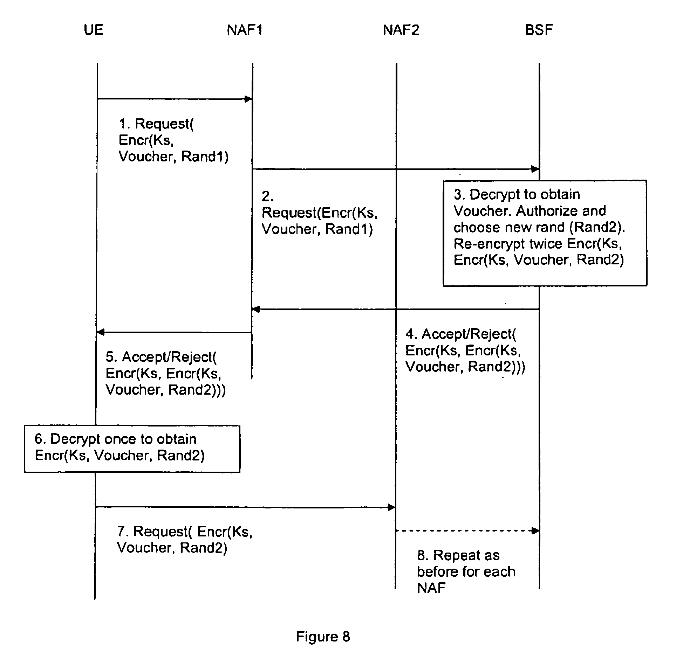

It is noticed that, in the previous embodiments of the second aspect of the invention, each NAF will receive the same Authentication Voucher thus providing some possibility for colluding NAF entities to track the user. This problem is solved in another embodiment, illustrated in Figure 8. According to this embodiment, the Authentication Voucher is made unique for each NAF.

With reference to Figure 8 step 1, UE sends a request for access to NAF1 including the encrypted Authentication Voucher whereby the encryption function (Encr) generally depends on encryption key Ks, encrypted data i.e. the Authentication Voucher, and a random number (Rand1). Generally, the encryption has the form Encr(Ks, Voucher, Rand1). In one particular embodiment, Rand1 is concatenated with the Voucher and the encryption has the form Encr(Ks, Rand1 || Voucher) where "||" denotes concatenation.

Since NAF does not have the key Ks and cannot decrypt the Authentication Voucher, NAF forwards the message in step 2 to BSF for verification.

In step 3, BSF decrypts the message, extracts the Authentication Voucher, and verifies the validity of the Authentication Voucher. Thereafter, BSF determines a second random number (Rand2) and double encrypts, using the key Ks, the Authentication Voucher according to the formula:

$$Encr(Ks, Encr(Ks, Voucher, Rand2)).$$

In step 4, a return message is sent by BSF to NAF1 of the outcome of the verification including the double encrypted Authentication Voucher. NAF1 forwards the return message to UE in step 5. In step 6, UE decrypts the double encrypted message once to obtain:

$$Encr(Ks, Voucher, Rand2) \qquad Eq.\ (1)$$

In a forthcoming access to e.g. NAF2 in step 7, UE provides the encrypted Authentication Voucher according to Eq. (1) now including the second random number (Rand2). The same procedure as before is repeated as illustrated in step 8. Thus, each access to a NAF will use a unique Authentication Voucher preventing tracking of the user.

**References**

[1] 3GPP TR 33.919: "3rd Generation Partnership Project; Technical Specification Group Services and System Aspects; Generic Authentication Architecture (GAA); System description" v.6.1.0.

[2] 3GPP TS 33.220: "3rd Generation Partnership Project; Technical Specification Group Services and System Aspects; Generic Authentication Architecture (GAA); Generic Bootstrapping Architecture" v.6.5.0

[3] 3GPP TS 33.222: "3rd Generation Partnership Project; Technical Specification Group Services and System Aspects; Generic Authentication Architecture (GAA); Access to Network Application Function using HTTPS" v6.2.0.

[4] 3GPP TSG SA WG3 Security - SA3#39, S3-050406: Updated Analysis of GBA based IMS signaling protection proposals

[5] 3GPP TS 33.203: "3rd Generation Partnership Project; Technical Specification Group Services and System Aspects; Access security for IP-based services" v6.7.0

**Claims**

1. A method in a network for communication that implements GAA/GBA (Generic Authentication Architecture/Generic Bootstrapping Architecture) and wherein a BSF (Bootstrapping Server Function) network node (120) performs initial steps at least comprising authorizing a user entity UE (140) and establishing at least one security key, shared with UE, comprising first key Ks and associated key identifier B_TID, and at least one second key Ks_NAF derived from Ks and associated with at least one network application function NAF (130), for improved privacy protection and authentication support comprising the steps:

    - the network node BSF further generating an Authentication Voucher asserting that UE has been authenticated;
    - generating at least one key identifier B_TID_NAF associated with said at least one second derived key, the key identifier being unique for each NAF;
    - the network node BSF sending the identifiers B_TID and the at least one identifier B_TID_NAF to UE;
    - a network application function NAF, in response to an access for services by UE including the at least one identifier B_TID_NAF, providing at least said identifier B_TID_NAF to BSF;
    - the network node BSF identifying, in response to said identifier B_TID_NAF, the Authentication Voucher of UE, for enabling establishment of authentication status of UE.

2. The method of claim 1 wherein the user entity UE is identified, over the Ub interface between BSF-UE, by said identifier B_TID.

3. The method of claim 1 wherein the step of sending the key identifier B_TID and the at least one identifier B_TID_NAF from BSF to UE further comprises encrypting the identifiers using the key Ks.

4. The method of claim 1 wherein the Authentication Voucher is unique for each NAF and identified by said at least one identifier B_TID_NAF.

5. The method of claim 1 wherein the step of providing further includes provision of a signature of B_TID_NAF , the signature being created by UE using the key Ks and included in said access for services.

6. The method of claim 5 wherein the signature includes a freshness token.

7. The method of claim 5 further comprising the step of BSF verifying the signature of B_TID_NAF.

8. The method of claims 1 - 5 further comprising the step of NAF establishing authentication status by requesting the Authentication Voucher from the network node BSF.

9. The method of claims 1 - 5 further comprising the step of BSF establishing authentication status by analysis of the Authentication Voucher.

10. The method of claims 1 - 5 wherein NAF in said providing further includes request for the key Ks_NAF.

11. The method of claims 1 - 5 wherein the Authentication Voucher includes information on at least one of time of validity, time for authentication, and authentication method.

12. The method of claim 8 further comprising the steps:

    - NAF presenting to the network node BSF additional requirements for accepting validity of authorization;
    - BSF verifying to NAF which of the additional requirements are fulfilled.

13. The method of claims 1 - 3 further comprising the step of BSF sending to UE the Authentication Voucher in conjunction with the sending of identifiers or separate there from.

14. The method of claim 13 wherein the Authentication Voucher is made unique for each NAF and identified by said at least one identifier B_TID_NAF.

15. The method of claim 14 wherein the Authentication Voucher is made unique by BSF encrypting it using the key Ks and a selected random number (Rand) different for each NAF according to the formula Encr(Ks, Voucher, Rand), where Encr is an encryption function and wherein said method further comprises establishing authentication status by:

    - sending the encrypted Authentication Voucher to BSF;
    - BSF decrypting the Authentication Voucher and verifying its validity;
    - BSF selecting a new random number (Rand2) and re-encrypts the Authentication Voucher twice with the key Ks as: Encr(Ks, Encr(Ks, Voucher,Rand2));
    - BSF returning the re-encrypted Authentication Voucher to UE through NAF;
    - UE decrypting the received Authentication Voucher once to obtain: Encr(Ks, Voucher, Rand2);
    - UE using the once decrypted Authentication Voucher in a subsequent access to a NAF.

16. In a network for communication that implements the GAA/GBA-architecture a network node BSF (120) performing authentication of a user entity UE (140) and negotiating a shared key Ks with UE (140), the network node BSF (120) further comprising:

    - means (320) for generation of an identifier B_TID associated with Ks;
    - means (320) for generation of at least one derived key Ks_NAF, associated with at least one network application function NAF (130), and for generation of at least a corresponding identifier B_TID_NAF, the identifier being unique for each NAF (130);
    - means (330) for generation of an Authentication Voucher asserting that UE has been authenticated;
    - means (360) for storing the keys, key identifiers, and Authentication Voucher and for linking these entities to UE;
    - means (310) for sending B_TID and the at least one B_TID_NAF to UE;
    - means (360) for retrieving, in response to reception of at least one identifier B_TID_NAF related to a user equipment UE, a corresponding Authentication Voucher to enable establishment of authentication status of UE.

17. The network node according to claim 16 further comprising means (380) for encryption using the key Ks and an encryption algorithm (Encr).

18. The network node according to claim 17 comprising means (390) for generation of a random number Rand and wherein said means (380) for encryption is used to encrypt the Authentication Voucher in the form Encr(Ks, Voucher, Rand).

19. The network node according to claim 16 comprising means (310) for receiving and responding to a request from NAF concerning details of the authentication of a user entity UE obtained from means (340) analysing the Authentication Voucher.

20. The network node according to claim 19 wherein said request concerns any or all of time for authentication, method for authentication, or lifetime of authentication.

21. A system for providing improved privacy protection and authentication in a communications network implementing a GAA/GBA infrastructure (100), the system comprising:

    - a bootstrap server function BSF (120) that provides an Authentication Voucher asserting authentication of a user entity UE (140) and identifiers B_TID_NAF of keys Ks_NAF associated with at least one network application function NAF, the identifiers being unique for each NAF (130);
    - an interface Ub between BSF(130) -UE(140) that is further protected by encryption using key Ks shared by BSF (130) and UE (140);
    - an interface Ua between UE (140) -NAF (130) that is further protected against man-in-the-middle attacks by signing messages using key Ks and freshness token;
    - at least one network application function NAF (130) arranged to communicate with BSF (120) about validity of an Authentication Voucher such as to prevent several NAF (130) entities from colluding in order to track a user entity UE (140).

**22.** The system according to claim 21 wherein said arrangement comprises:

- means (330) for limiting information in the Authentication Voucher to include only an assertion that authentication has taken place;
- means for providing for NAF (130) to specify further requirements related to the authentication of a user and means (340) at BSF (130) for verification of the fulfilment of each further requirement.

**23.** The system according to claim 21 wherein said arrangement comprises means (380) for encrypting the Authentication Voucher using key Ks and in dependence of a random number such as to form a unique Authentication Voucher for each NAF (130).

**Patentansprüche**

**1.** Verfahren in einem Netz für Kommunikation, das GAA/GBA (allgemeine Authentifizierungsarchitektur/allgemeine Bootstraparchitektur) implementiert, und worin ein BSF-(Bootstrap-Serverfunktion)-Netzknoten (120) anfängliche Schritte ausführt, die zumindest umfassen, eine Benutzerinstanz UE (140) zum Autorisieren und mindestens einen Sicherheitsschlüssel einzurichten, der mit UE gemeinsam genutzt wird, umfassend einen ersten Schlüssel Ks und eine assoziierte Schlüsselkennung B_TID sowie mindestens einen zweiten Schlüssel Ks_NAF, der von Ks abgeleitet und mit mindestens einer Netzanwendungsfunktion NAF (130) assoziiert ist, für verbesserten Schutz der Privatsphäre und verbesserte Authentifizierungsunterstützung, die folgenden Schritte umfassend:

- durch den Netzknoten BSF weiteres Erzeugen eines Authentifizierungsbelegs, der erklärt, dass UE authentifiziert wurde;
- Erzeugen mindestens einer Schlüsselkennung B_TID_NAF, die mit dem mindestens einen zweiten abgeleiteten Schlüssel assoziiert ist, wobei die Schlüsselkennung für jede NAF eindeutig ist;
- durch den Netzknoten BSF Senden der Kennungen B_TID und der mindestens einen Kennung B_TID_NAF an UE;
- durch eine Netzanwendungsfunktion NAF, als Reaktion auf einen Zugang für Dienste durch UE, Aufnehmen der mindestens einen Kennung B_TID_NAF, Bereitstellen zumindest der Kennung B_TID_NAF für BSF;
- durch den Netzknoten BSF Identifizieren, als Reaktion auf die Kennung B_TID_NAF, des Authentifizierungsbelegs von UE zum Ermöglichen der Feststellung des Authentifizierungsstatus von UE.

**2.** Verfahren nach Anspruch 1, wobei die Benutzerinstanz UE über die Schnittstelle Ub zwischen BSF und UE durch die Kennung B_TID identifiziert wird.

**3.** Verfahren nach Anspruch 1, wobei der Schritt des Sendens der Schlüsselkennung B_TID und der mindestens einen Kennung B_TID_NAF von BSF zu UE weiter umfasst, die Kennungen unter Verwendung des Schlüssels Ks zu verschlüsseln.

**4.** Verfahren nach Anspruch 1, wobei der Authentifizierungsbeleg für jede NAF eindeutig ist und durch die mindestens eine Kennung B_TID_NAF identifiziert wird.

**5.** Verfahren nach Anspruch 1, wobei der Schritt des Bereitstellens weiter Bereitstellung einer Signatur von B_TID_NAF enthält, wobei die Signatur von UE unter Verwendung des Schlüssels Ks erzeugt und in dem Zugang für Dienste aufgenommen wird.

**6.** Verfahren nach Anspruch 5, wobei die Signatur eine Frischemarke enthält.

**7.** Verfahren nach Anspruch 5, weiter den Schritt enthaltend, dass BSF die Signatur von B_TID_NAF verifiziert.

**8.** Verfahren nach den Ansprüchen 1 - 5, weiter den Schritt enthaltend, dass NAF den Authentifizierungsstatus durch Anforderung des Authentifizierungsbelegs von dem Netzknoten BSF ermittelt.

**9.** Verfahren nach den Ansprüchen 1 - 5, weiter den Schritt enthaltend, dass BSF den Authentifizierungsstatus durch Analyse des Authentifizierungsbelegs ermittelt.

**10.** Verfahren nach den Ansprüchen 1 - 5, wobei NAF in der Bereitstellung weiter eine Anforderung des Schlüssels Ks_NAF enthält.

11. Verfahren nach den Ansprüchen 1 - 5, wobei der Authentifizierungsbeleg Informationen über mindestens eines von Gültigkeitszeit, Zeit für Authentifizierung und Authentifizierungsverfahren enthält.

12. Verfahren nach Anspruch 8, weiter die folgenden Schritte enthaltend:

   - Präsentieren, durch NAF, zusätzlicher Anforderungen zur Akzeptierung der Gültigkeit der Autorisierung an den Netzknoten BSF;
   - Verifizieren gegenüber NAF, durch BSF, welche der zusätzlichen Anforderungen erfüllt sind.

13. Verfahren nach den Ansprüchen 1 - 3, weiter den Schritt enthaltend, dass BSF den Authentifizierungsbeleg in Verbindung mit dem Senden von Kennungen oder getrennt davon an UE sendet.

14. Verfahren nach Anspruch 13, wobei der Authentifizierungsbeleg für jede NAF eindeutig gemacht und durch die mindestens eine Kennung B_TID_NAF identifiziert wird.

15. Verfahren nach Anspruch 14, wobei der Authentifizierungsbeleg eindeutig gemacht wird, indem BSF ihn unter Verwendung des Schlüssels Ks und einer ausgewählten Zufallszahl (Rand), die für jede NAF verschieden ist, gemäß der Formel Encr(Ks, Voucher, Rand) verschlüsselt, wobei Encr eine Verschlüsselungsfunktion ist, und wobei das Verfahren weiterhin umfasst, den Authentifizierungsstatus festzustellen durch:

   - Senden des verschlüsselten Authentifizierungsbelegs an BSF;
   - Entschlüsseln, durch BSF, des Authentifizierungsbelegs und Verifizieren seiner Gültigkeit;
   - Auswählen, durch BSF, einer neuen Zufallszahl (Rand2) und erneutes zweimaliges Verschlüsseln des Authentifizierungsbelegs mit dem Schlüssel Ks als: Encr(Ks, Encr(Ks, Voucher, Rand2));
   - Zurückgeben, durch BSF, des erneut verschlüsselten Authentifizierungsbelegs an UE durch NAF;
   - einmaliges Entschlüsseln, durch UE, des empfangenen Authentifizierungsbelegs, um Encr(Ks, Voucher, Rand2) zu erhalten;
   - Verwenden, durch UE, des einmal entschlüsselten Authentifizierungsbelegs in einem anschließenden Zugang zu einer NAF.

16. In einem Netz für Kommunikation, das die GAA/GBA-Architektur implementiert, Durchführen, durch einen Netzknoten BSF (120), von Authentifizierung einer Benutzerinstanz UE (140) und Verhandeln eines gemeinsam genutzten Schlüssels Ks mit UE (140), der Netzknoten BSF (120) weiter umfassend:

   - Mittel (320) zum Erzeugen einer Kennung B_TID, die mit Ks assoziiert ist;
   - Mittel (320) zum Erzeugen mindestens eines abgeleiteten Schlüssels Ks_NAF, die mit mindestens einer Netzanwendungsfunktion NAF (130) assoziiert ist, und zum Erzeugen mindestens einer korrespondierenden Kennung B_TID_NAF, wobei die Kennung für jede NAF (130) eindeutig ist;
   - Mittel (330) zum Erzeugen eines Authentifizierungsbelegs, der erklärt, dass UE authentifiziert wurde;
   - Mittel (360) zum Speichern der Schlüssel, Schlüsselkennungen und des Authentifizierungsbelegs und zum Verknüpfen dieser Instanzen mit UE;
   - Mittel (310) zum Senden von B_TID und dem mindestens einen B_TID_NAF an UE;
   - Mittel (360) zum Abrufen, als Reaktion auf den Empfang mindestens einer Kennung B_TID_NAF, die zu einer Benutzerausrüstung UE in Beziehung steht, eines korrespondierenden Authentifizierungsbelegs, um die Feststellung des Authentifizierungsstatus von UE zu ermöglichen.

17. Netzknoten nach Anspruch 16, weiter Mittel (380) zum Verschlüsseln unter Verwendung des Schlüssels Ks und eines Verschlüsselungsalgorithmus (Encr) umfassend.

18. Netzknoten nach Anspruch 17, Mittel (390) zum Erzeugen einer Zufallszahl Rand umfassend, und wobei das Mittel (380) zum Verschlüsseln verwendet wird, um den Authentifizierungsbeleg in der Form Encr(Ks, Voucher, Rand) zu verschlüsseln.

19. Netzknoten nach Anspruch 16, Mittel (310) zum Empfangen von und Reagieren auf eine Anforderung von NAF bezüglich von Einzelheiten der Authentifizierung einer Benutzerinstanz UE, die von den Mitteln (340), die den Authentifizierungsbeleg analysieren, erhalten wurden, umfassend.

**20.** Netzknoten nach Anspruch 19, wobei die Anforderung beliebige oder alle von Zeit für Authentifizierung, Verfahren für Authentifizierung oder Lebendauer der Authentifizierung betrifft.

**21.** System zum Bereitstellen von verbessertem Schutz der Privatsphäre und Authentifizierung in einem Kommunikationsnetz, das eine GAA/GBA-Infrastruktur (100) implementiert, das System umfassend:

- eine Bootstrap-Serverfunktion BSF (120), die einen Authentifizierungsbeleg, der Authentifizierung einer Benutzerinstanz UE (140) erklärt, und Kennungen B_TID_NAF der Schlüssel Ks_NAF, die mit mindestens einer Netzanwendungsfunktion NAF assoziiert sind, wobei die Kennungen für jede NAF (130) eindeutig sind, bereitstellt;
- eine Schnittstelle Ub zwischen BSF (130) und UE (140), die weiter durch Verschlüsselung unter Verwendung des Schlüssels Ks, der gemeinsam von BSF (130) und UE (140) genutzt wird, geschützt wird;
- eine Schnittstelle Ua zwischen UE (140) und NAF (130), die weiter gegen Lauschangriffe durch Signieren von Nachrichten unter Verwendung des Schlüssels Ks und einer Frischemarke geschützt wird;
- mindestens eine Netzanwendungsfunktion NAF (130), die angeordnet ist, um mit BSF (120) über Gültigkeit eines Authentifizierungsbelegs zu kommunizieren, um zu verhindern, dass mehrere NAF-Instanzen (130) in heimlichem Einverständnis handeln, um eine Benutzerinstanz UE (140) zu verfolgen.

**22.** System nach Anspruch 21, wobei die Anordnung umfasst:

- Mittel (330) zum Begrenzen von Informationen in dem Authentifizierungsbeleg, um nur eine Erklärung, dass Authentifizierung erfolgt ist, aufzunehmen;

Mittel zur Bereitstellung für NAF (130), um weitere Anforderungen in Beziehung auf die Authentifizierung eines Benutzers zu spezifizieren, und Mittel (340) am BSF (130) zum Verifizieren der Erfüllung jeder weiteren Anforderung.

**23.** System nach Anspruch 21, wobei die Anordnung Mittel (380) zum Verschlüsseln des Authentifizierungsbelegs unter Verwendung des Schlüssels Ks und in Abhängigkeit von einer Zufallszahl umfasst, um einen eindeutigen Authentifizierungsbeleg für jede NAF (130) zu bilden.

**Revendications**

**1.** Procédé dans un réseau destiné à une communication mettant en oeuvre une architecture GAA /GBA (Architecture d'authentification générique / Architecture d'amorçage générique) et dans lequel un noeud de réseau de fonction BSF (fonction de serveur d'amorçage) (120) met en oeuvre des étapes initiales comportant au moins les étapes consistant à autoriser une entité utilisateur UE (140) et établir au moins une clé de sécurité, partagée avec l'entité UE, comportant une première clé Ks et un identifiant de clé associé B_TID, et au moins une seconde clé Ks_NAF dérivée de la clé Ks et associée à au moins une fonction d'application de réseau NAF (130), pour une protection améliorée de la confidentialité et une prise en charge d'authentification, comportant les étapes ci-dessous consistant à ou dans lesquelles :

- le noeud de réseau de fonction BSF génère en outre un justificatif d'authentification certifiant que l'entité UE a été authentifiée ;
- générer au moins un identifiant de clé B_TID_NAF associé à ladite au moins une seconde clé dérivée, l'identifiant de clé étant unique pour chaque fonction NAF ;
- le noeud de réseau de fonction BSF transmet les identifiants B_TID et ledit au moins un identifiant B_TID_NAF à l'entité UE ;
- une fonction d'application de réseau NAF, en réponse à un accès pour des services par l'entité UE inclut ledit au moins un identifiant B_TID_NAF, et délivre au moins ledit identifiant B_TID_NAF à la fonction BSF ;
- le noeud de réseau de fonction BSF identifie, en réponse audit identifiant B_TID_NAF, le justificatif d'authentification de l'entité UE, de manière à permettre l'établissement d'un état d'authentification de l'entité UE.

**2.** Procédé selon la revendication 1, dans lequel l'entité utilisateur UE est identifiée, sur l'interface Ub entre la fonction BSF et l'entité UE, par ledit identifiant B_TID.

**3.** Procédé selon la revendication 1, dans lequel l'étape consistant à transmettre l'identifiant de clé B_TID et ledit au moins un identifiant B_TID_NAF de la fonction BSF à l'entité UE comporte en outre l'étape consistant à chiffrer les identifiants en faisant appel à la clé Ks.

4. Procédé selon la revendication 1, dans lequel le justificatif d'authentification est unique pour chaque fonction NAF et est identifié par ledit au moins un identifiant B_TID_NAF.

5. Procédé selon la revendication 1, dans lequel l'étape de fourniture comporte en outre la fourniture d'une signature de B_TID_NAF, la signature étant générée par l'entité UE en faisant appel à la clé Ks et étant incluse dans ledit accès pour des services.

6. Procédé selon la revendication 5, dans lequel la signature inclut un jeton d'authentification de validité.

7. Procédé selon la revendication 5, comportant en outre l'étape dans laquelle la fonction BSF vérifie la signature de B_TID_NAF.

8. Procédé selon l'une quelconque des revendications 1 à 5, comportant en outre l'étape dans laquelle la fonction NAF établit un état d'authentification en demandant le justificatif d'authentification au noeud de réseau de fonction BSF.

9. Procédé selon l'une quelconque des revendications 1 à 5, comportant en outre l'étape dans laquelle la fonction BSF établit un état d'authentification en analysant le justificatif d'authentification.

10. Procédé selon l'une quelconque des revendications 1 à 5, dans lequel la fonction NAF, dans ladite étape de fourniture, inclut en outre une demande de la clé Ks_NAF.

11. Procédé selon l'une quelconque des revendications 1 à 5, dans lequel le justificatif d'authentification comporte des informations sur au moins l'un des éléments parmi un temps de validité, un temps d'authentification et un procédé d'authentification.

12. Procédé selon la revendication 8, comportant en outre les étapes ci-dessous dans lesquelles :

   - la fonction NAF présente au noeud de réseau de fonction BSF des exigences supplémentaires en vue de l'acceptation de la validité d'une autorisation ;
   - la fonction BSF vérifie au niveau de la fonction NAF quelles exigences supplémentaires sont satisfaites.

13. Procédé selon l'une quelconque des revendications 1 à 3, comportant en outre l'étape dans laquelle la fonction BSF transmet le justificatif d'authentification à l'entité UE, conjointement ou non à l'envoi des identifiants.

14. Procédé selon la revendication 13, dans lequel le justificatif d'authentification est rendu unique pour chaque fonction NAF et est identifié par ledit au moins un identifiant B_TID_NAF.

15. Procédé selon la revendication 14, dans lequel le justificatif d'authentification est rendu unique par la fonction BSF laquelle le chiffre en faisant appel à la clé Ks et à un nombre aléatoire sélectionné (nombre Rand) différent pour chaque fonction NAF, selon la formule Encr(clé Ks, justificatif, Rand), où Encr représente une fonction de chiffrement et où ledit procédé comporte en outre l'étape consistant à établir un état d'authentification :

   - en envoyant le justificatif d'authentification chiffré à la fonction BSF ;
   - la fonction BSF déchiffre le justificatif d'authentification et vérifie sa validité ;
   - la fonction BSF sélectionne un nouveau nombre aléatoire (Rand2) et chiffre à nouveau le justificatif d'authentification à deux reprises à l'aide de la clé Ks selon la formule : Encr(clé Ks, Encr(clé Ks, justificatif, Rand2)) ;
   - la fonction BSF retransmet le justificatif d'authentification nouvellement chiffré à l'entité UE via la fonction NAF ;
   - l'entité UE déchiffre une seule fois le justificatif d'authentification reçu de manière à obtenir la formule : Encr (clé Ks, justificatif, Rand2) ;
   - l'entité UE utilise le justificatif d'authentification déchiffré une seule fois lors d'un accès subséquent à une fonction NAF.

16. Noeud de réseau dans un réseau destiné à une communication mettant en oeuvre l'architecture GAA / GBA comportant un noeud de réseau de fonction BSF (120) exécutant une authentification d'une entité utilisateur UE (140) et négociant une clé partagée Ks avec l'entité UE (140), le noeud de réseau de fonction BSF (120) comportant en outre :

- un moyen (320) permettant la génération d'un identifiant B_TID associé à la clé Ks ;
- un moyen (320) permettant la génération d'au moins une clé dérivée Ks_NAF, associée à au moins une fonction d'application de réseau NAF (130), et permettant la génération d'au moins un identifiant B_TID_NAF correspondant, l'identifiant étant unique pour chaque fonction NAF (130) ;
- un moyen (330) permettant la génération d'un justificatif d'authentification certifiant que l'entité UE a bien été authentifiée ;
- un moyen (360) permettant le stockage des clés, des identifiants de clé et du justificatif d'authentification et permettant d'associer ces éléments à l'entité UE ;
- un moyen (310) permettant la transmission de B_TID et dudit au moins un identifiant B_TID_NAF à l'entité UE ;
- un moyen (360) permettant la récupération, en réponse à la réception d'au moins un identifiant B_TID_NAF connexe à une entité utilisateur UE, d'un justificatif d'authentification correspondant, de manière à permettre l'établissement d'un état d'authentification de l'entité UE.

17. Noeud de réseau selon la revendication 16, comportant en outre un moyen (380) de chiffrement faisant appel à la clé Ks et à un algorithme de chiffrement (Encr).

18. Noeud de réseau selon la revendication 17, comportant un moyen (390) permettant la génération d'un nombre aléatoire Rand et dans lequel ledit moyen (380) de chiffrement est utilisé de manière à chiffrer le justificatif d'authentification sous la forme Encr(clé Ks, justificatif, Rand).

19. Noeud de réseau selon la revendication 16, comportant un moyen (310) pour recevoir et répondre à une demande en provenance de la fonction NAF relativement à des détails de l'authentification d'une entité utilisateur UE obtenus à partir d'un moyen (340) analysant le justificatif d'authentification.

20. Noeud de réseau selon la revendication 19, dans lequel ladite demande concerne l'un quelconque ou l'ensemble des éléments parmi un temps d'authentification, un procédé d'authentification et une durée de vie de l'authentification.

21. Système destiné à fournir une authentification et une protection améliorées de la confidentialité dans un réseau de communication mettant en oeuvre une infrastructure GAA / GBA (100), le système comportant :

- une fonction de serveur d'amorçage BSF (120) laquelle délivre un justificatif d'authentification certifiant l'authentification d'une entité utilisateur UE (140) et des identifiants B_TID_NAF de clés Ks_NAF associés à au moins une fonction d'application de réseau NAF, les identifiants étant uniques pour chaque fonction NAF (130) ;
- une interface Ub entre la fonction BSF (130) et l'entité UE (140) laquelle est en outre protégée par un chiffrement faisant appel à une clé Ks partagée par la fonction BSF (130) et l'entité UE (140) ;
- une interface Ua entre l'entité UE (140) et la fonction NAF (130) laquelle est en outre protégée contre les attaques malveillantes par la signature de messages utilisant une clé Ks et un jeton d'authentification de validité ;
- au moins une fonction d'application de réseau NAF (130) agencée de manière à communiquer avec la fonction BSF (120) concernant la validité d'un justificatif d'authentification, de manière à empêcher qu'une pluralité d'entités de fonction NAF (130) ne s'associent en vue de suivre l'entité utilisateur UE (140).

22. Système selon la revendication 21, dans lequel ledit agencement comporte :

- un moyen (330) permettant de limiter les informations dans le justificatif d'authentification de manière à n'inclure qu'une assertion que l'authentification a été mise en oeuvre;
- un moyen de fourniture permettant à la fonction NAF (130) de spécifier des exigences supplémentaires connexes à l'authentification d'un utilisateur et un moyen (340), au niveau de la fonction BSF (130), permettant de vérifier le respect de chaque exigence supplémentaire.

23. Système selon la revendication 21, dans lequel ledit agencement comporte un moyen (380) permettant de chiffrer le justificatif d'authentification en faisant appel à la clé Ks et à un nombre aléatoire dépendant, de manière à former un unique justificatif d'authentification pour chaque fonction NAF (130).

Figure 1 (prior art)

UE accesses network application
function NAF over interface Ua — 210

Is bootstrapping
information
available? — 220

Yes

No

NAF requests UE over Ua interface to
initiate bootstrapping for generation of
shared keys and UE forwards request to
BSF — 230

BSF requests authentication vector from
HSS over the Zh interface. — 240

BSF performs AKA authentication with
UE whereby a shared key Ks is
generated. BSF generates Transaction
Identifier B-TID. — 250

B-TID is transfered to NAF over Ub and
Ua interfaces through UE — 260

NAF requests over the Zn interface BSF
to provide credential material identified
by B-TID. — 270

NAF responds UE the result of the
authentication — 280

Figure 2 (prior art)

300

310

370

Input/Output

Processor 350

Key and
identifier
generation 320

Memory 360

Generation of
Authentication
voucher 330

Analysis and
verification of
voucher 340

Encryption/
Decryption 380

Random number
generator 390

Figure 3

UE          BSF          HSS

1. Request [user identity or
B_TID, (NAF_Id)n, Spec]

2. User authentication
procedure

3. Generate Ks, (Ks_NAF)n,
Authentication Voucher,
B_TID, (B_TID_NAF)n, set
key Lifetime

4. B_TID, (B_TID_NAF)n,
Lifetime

Figure 4

Figure 5

Figure 6

EP 1 900 169 B1

Figure 7

21

UE　　　　　　NAF1　　　　　　NAF2　　　　　　BSF

1. Request(
Encr(Ks,
Voucher, Rand1)

2.
Request(Encr(Ks,
Voucher, Rand1)

3. Decrypt to obtain
Voucher. Authorize and
choose new rand (Rand2).
Re-encrypt twice Encr(Ks,
Encr(Ks, Voucher, Rand2)

4. Accept/Reject(
Encr(Ks, Encr(Ks,
Voucher, Rand2)))

5. Accept/Reject(
Encr(Ks, Encr(Ks,
Voucher, Rand2)))

6. Decrypt once to obtain
Encr(Ks, Voucher, Rand2)

7. Request( Encr(Ks,
Voucher, Rand2)

8. Repeat as
before for each
NAF

Figure 8